# EUROPEAN PATENT SPECIFICATION

(11) **EP 2 584 213 B1**
(45) Date of publication and mention of the grant of the patent: **16.12.2015**
(21) Application number: 12188825.9
(22) Date of filing: 17.10.2012
(51) Int. Cl.: F16D 65/18, F16D 65/56, F16D 66/02, F16D 65/46

(54) **Mechanical arresting disk brake**
Mechanisch arretierende Scheibenbremse
Frein à disque d'arrêt mécanique

(30) Priority: 17.10.2011 JP 2011227815
(43) Date of publication of application: 24.04.2013
(73) Proprietor: Nissin Kogyo Co., Ltd., Ueda-shi Nagano 386-0016 (JP); Yamaha Motor Co., Ltd., Shizuoka-ken 438-0025 (JP)
(72) Inventor: Naitou, Tetsuya, Ueda-City, Nagano 386-0016 (JP); Tezuka, Toshihiro, Ueda-City, Nagano 386-0016 (JP); Hombo, Yoshihisa, Iwata-City, Shizuoka 438-0025 (JP)
(74) Representative: Isarpatent

(56) References cited:
- EP-A2- 1 391 628
- DE-A1- 3 543 511
- JP-A- 2002 206 576
- JP-U- 61 116 242

## Description

The present invention relates to a mechanical arresting disc break according to the preamble of claim 1 which is known from JP 61 11 62 42 U.

EP 1 391 628 A1 discloses a mechanical arresting disk brake wherein the tip of a piston is fittingly arranged with a C-clip intervening on a circular coupling section formed on a backing plate that constitutes a backside of the friction pad to connect the friction pad and the piston in such a way as to be rotatable independently of each other.

Conventionally, as a vehicular mechanical arresting disk brake, such as exemplified by the device set forth in JP 1 030662 Y, disk brakes are known that upon operating a brake pedal or brake lever perform vehicle braking by causing friction pads to be thrust toward a disk rotor. Further, in the disk brake according to JP 1 030662 Y, which includes an integrally formed piston and adjustment bolt, turning the adjustment bolt causes the piston to exert pressure toward the disk rotor on the friction pads, which are hangingly supported on a calliper body hanger pin, such that the friction pads slide toward the disk rotor and touch the surface of the disk rotor to perform the braking of the vehicle.

However, because the piston and adjustment bolt of the disk brake according to JP 1 030662 Y are formed integrally, the piston turns jointly with the adjustment bolt while touching a friction pad to exert pressure toward the disk rotor. The friction pad that is pressed by the piston toward the disk rotor touches the disk rotor, whereby the braking action of the brake is performed. Nevertheless, excess friction forces between the piston and friction pad arise at the time of braking, due to the piston being in rotation while pressing against the friction pad. In consequence, when for braking release attempting to release the piston pressure on the friction pad by turning the piston in the reverse direction, it occurs that the piston is difficult to separate from the friction pad, due to the excess friction forces between the piston and friction pad.

Now, there exist mechanical arresting disk brakes wherein, such as in a device set forth in JP 2002 206576 A, the adjustment bolt and piston are formed separately and assembled for the adjustment bolt and the piston to rotate independently of each other. In these mechanical arresting disk brakes, due to the adjustment bolt and the piston being rotatable independently of each other as described, the adjustment bolt can during braking release easily be turned in the direction opposite to when braking, even when the piston has become difficult to turn in the reverse direction due to friction between the piston and friction pad, which enables to forcibly slide the piston, being coupled to the adjustment bolt, together with the adjustment bolt in the direction away from the disk rotor. Consequently, the piston can be separated from the friction pad to perform the release of the braking action.

However, because in the mechanical arresting disk brake according to Patent document 2 the piston and adjustment bolt are formed and assembled separately, the configuration has become more complicated and the number of parts risen, causing high manufacturing cost.

### Disclosure of the Invention

To solve the above-described problem, the present invention aims at providing a mechanical arresting disk brake that, together with having a simple configuration wherein the adjustment bolt and piston are formed integrally, enables to smoothly perform a release of the braking action, without causing excess friction forces to arise between the piston and friction pad.

In order to solve the above described problem, the present invention as defined in independent claim 1 bases itself on a mechanical arresting disk brake comprising an adjustment bolt mounted on an action part side of a calliper body, a piston provided at a tip of said adjustment bolt, and friction pads on both the action part side and a reaction part side that are enabled to be brought into sliding contact with both side faces of the disk rotor by a movement of said piston toward the disk rotor.

The adjustment bolt and piston are formed integrally, which enables the configuration of the disk brake to be made simple, and thus to render manufacturing cost inexpensive. Further, by fittingly arranging a tip of the piston with an intervening C-clip on a circular coupling section formed on a backing plate that constitutes the back side of a friction pad, the friction pad and the piston are connected in such a way as to be rotatable independently of each other.

Connecting the friction pad and piston in such a way as to be rotatable independently of each other as described above enables the piston, when the mechanical arresting brake is released, to be rotated smoothly, independently of the friction pad, in the direction opposite to when braking, to be returned into its former position. This enables to prevent situations where releasing the braking action becomes difficult because the piston cannot be turned in the reverse direction. And, because the piston at the time of braking release slides into its former position as described above, the friction pad connected to the piston is enabled to be forcibly returned into its former position, such that the problem that the friction pad is dragged to the side of the disk rotor becomes unlikely to occur.

Further, the friction pads may comprise a circular plate shape. Employing a circular plate shape in this way makes it unnecessary to consider the orientation for mounting the friction pads, which enables the assembling properties to be improved.

Also, the friction pads may comprise indicator grooves that are exposable at a surface by wear of the friction pad, concavely provided in the outer periphery thereof in multiple locations. By thus concavely providing indicator grooves in multiple locations, the indicator grooves are easy to examine in any rotational phase of the friction pads, such that the time for changing the friction pads can easily be determined.

Also, a bracket may be fixedly arranged on the calliper body, the bracket comprising a recess that forms an inner peripheral surface in a direction tangential to the action part side friction pad, such that during braking the inner peripheral surface of the recess and an outer peripheral surface of the action part side friction pad come into line contact, to receive a braking torque from the friction pad at the inner peripheral surface of the recess.

By enabling the inner peripheral surface of the recess and the outer peripheral surface of the action part side friction pad to establish line contact, the contacting portions of the friction pad and the recess are enabled to be made small, such that generation of rust at the bracket, which arises from contact with the friction pad, can be avoided.

Because the present invention is configured as described above, by connecting the friction pad and piston in such a way as to be rotatable independently of each other, the piston at the time of braking release is enabled to be rotated smoothly, independently of the friction pad that is pressed against the disk rotor, in the direction opposite to when braking in order to be returned into its former position. This enables to prevent situations where releasing the braking action becomes difficult because the piston cannot be turned in the reverse direction. And, because the piston at the time of releasing the braking action slides into its former position as described above, the friction pad is enabled to be forcibly returned into its former position together with the piston, such that the problem that the friction pad is dragged to the side of the disk rotor becomes unlikely to occur.

### Brief Explanation of the Drawings

- Figure 1: Cross-sectional view of a calliper body at the time of braking, which shows a first embodiment of the invention
- Figure 2: Enlargement of a detail of Fig. 1
- Figure 3: (a) Plan view showing a friction pad of the first embodiment
(b) Cross-sectional view along B-B in (a)
- Figure 4: Cross-sectional view along A-A in Fig. 1

### First Embodiment

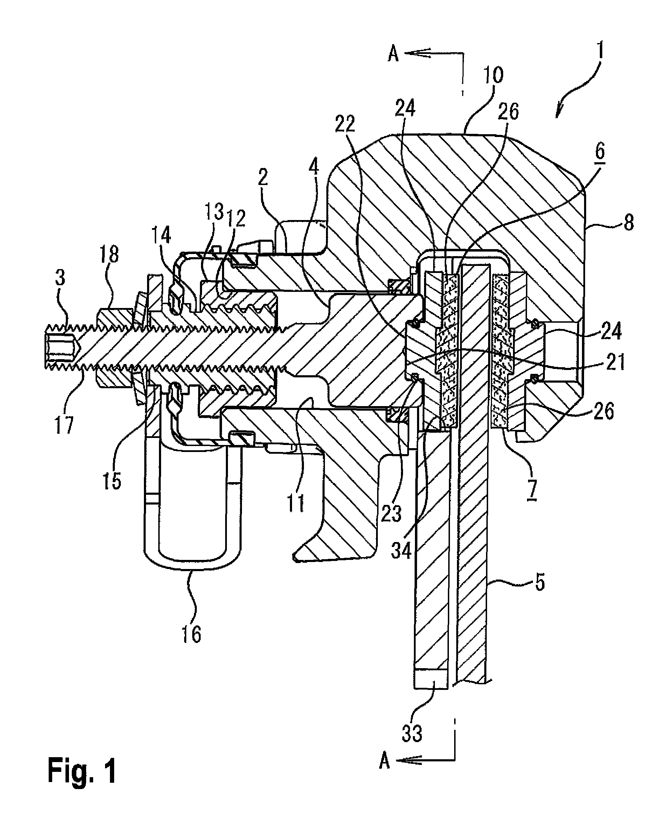

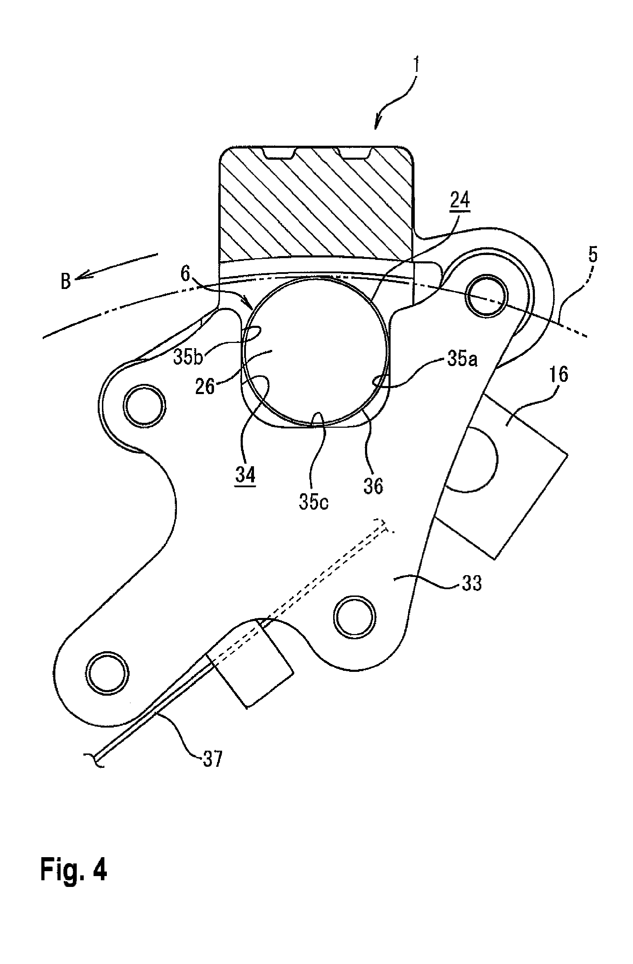

To explain the first embodiment of the present invention in line with Figs. 1 to 4, with a disk rotor (5) that during vehicular forward motion rotates unitedly with a wheel in the direction of arrow B in Fig. 4, and a calliper body (1) mounted on one side of said disk rotor (5) to the body of the vehicle, the first embodiment is based on a mechanical arresting disk brake comprising an adjustment bolt (3) mounted on an action part (2) side of the calliper body (1), a piston (4) provided at a tip of said adjustment bolt (3), and friction pads (6) (7) on both the action part side and a reaction part side that are enabled to be brought into sliding contact with both side faces of the disk rotor (5) by a movement of said piston toward the disk rotor (5).

To explain the first embodiment in more detail, as shown in Fig. 1, the calliper body (1) consists of an action part (2) and a reaction part (8) provided on both sides of the disk rotor (5), as well as a bridge part (10) that connects the action part (2) and reaction part (8) across the disk rotor (5). Internally, on the action part (2) side of the disk rotor (5), a cylinder bore (11) is formed as shown in Fig. 1.

Furthermore, inside an opening portion (12) on the action part (2) side of the cylinder bore (11), a tubular sleeve nut (13) having an internal thread is inserted and fixedly arranged. Within the sleeve nut (13), a tubular screw member (14) having an external thread screw-threadedly engageable to the internal thread is arranged by being screwed into the internal thread of the sleeve nut (13), the arrangement being such that one end (15) of the screw member (14) protrudes from the sleeve nut (13) to the outside.

At the one end (15) of the screw member (14), the mechanical arresting lever (16) is mounted to be rotatable jointly with the screw member (14), while the adjustment bolt (3) is insertedly arranged in the screw member (14). That is, within the screw member (14) an internal thread is formed, and the screw member (14) and adjustment bolt (3) are assembled by screwing an external thread formed at the peripheral surface of the adjustment bolt (3) into this internal thread.

The adjustment bolt (3), formed integrally with the piston (4) for pressing the action part side friction pad (6), has its rear end (17) on the side opposing the piston (4) arrangement side arranged protruding from the screw member (14) to the outside. By in this way integrally forming the adjustment bolt (3) and the piston (4), the structure of the mechanical arresting disk brake is enabled to be simplified due to a reduction in the number of components over conventional products where adjustment bolt (3) and piston (4) are formed separately in order to be assembled, such that achieving low manufacturing cost becomes possible.

Furthermore, by screwing a lock nut (18) onto the rear end (17) side of the adjustment bolt (3) to fasten the screw member (14) and the mechanical arresting lever (16), the adjustment bolt (3), screw member (14), and mechanical arresting lever (16) are fixedly connected such as to be enabled to rotate as a whole. The tip of the mechanical arresting lever (16) has one end of a brake wire (37) connected to it, with the other end of the brake wire (37) being coupled to a brake operator (not shown) for operation by the driver, such as a brake pedal or brake lever. Moreover, in the event of adjusting the brake clearance between the disk rotor (5) and the friction pad (6) by means of the adjustment bolt (3), the lock nut (18) is loosened in order to advance the adjustment bolt (3) alone inward to the disk rotor (5), thereby pushing the friction pad (6) to set the brake clearance, after which the adjustment bolt (3) is fixed using the lock nut (18).

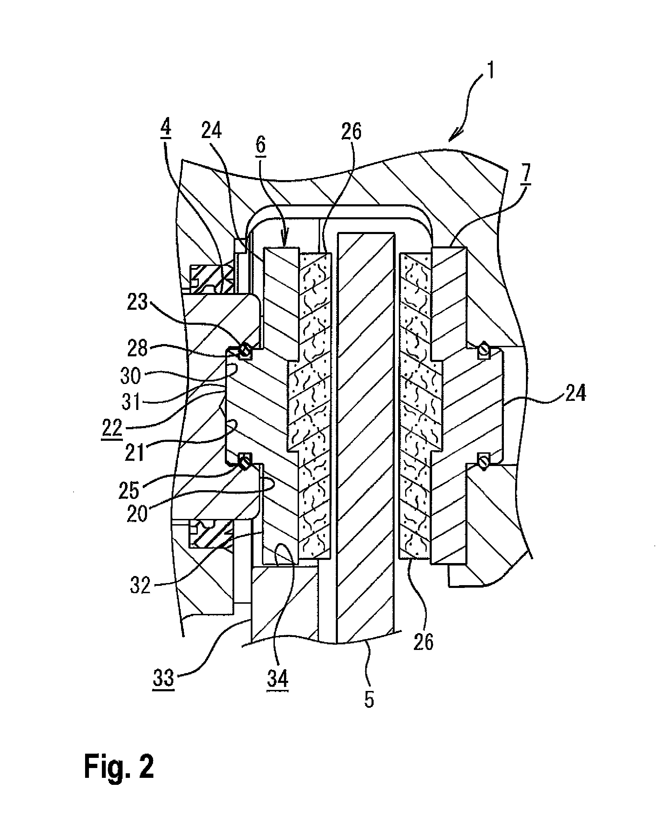

At a tip surface (20) of the piston (4), as shown in Fig. 2, a fitting recess (21) having a circular base and U-shaped cross section is concavely provided. Further, a cylindrical fitting protrusion (22) that fits into the fitting recess (21) is formed on a backing plate (24) of the friction pad (6). This fitting protrusion (22) corresponds to the circular coupling section of the present invention, with an engagement groove (25) for engagingly arranging a C-clip (23) being concavely provided in the circumferential direction at an outer circumferential surface of the fitting protrusion (22).

Further, while in the present embodiment a fitting recess (21) is formed in the piston (4) together with a fitting protrusion (22) being formed in the backing plate (24) of the friction pad (6), other different embodiments are not limited thereto, but may comprise a fitting protrusion (22) formed on the piston (4) together with a fitting recess (21) formed in the backing plate (24) of the friction pad (6).

Here, the friction pads (6) (7) on both the action part side and the reaction part side are composed of a backing plate (24) and a lining (26), their overall shape being that of a circular plate. Consequently, there is no need to consider the orientation with which the friction pads (6) (7) are to be mounted, which enables the assembling properties to be improved.

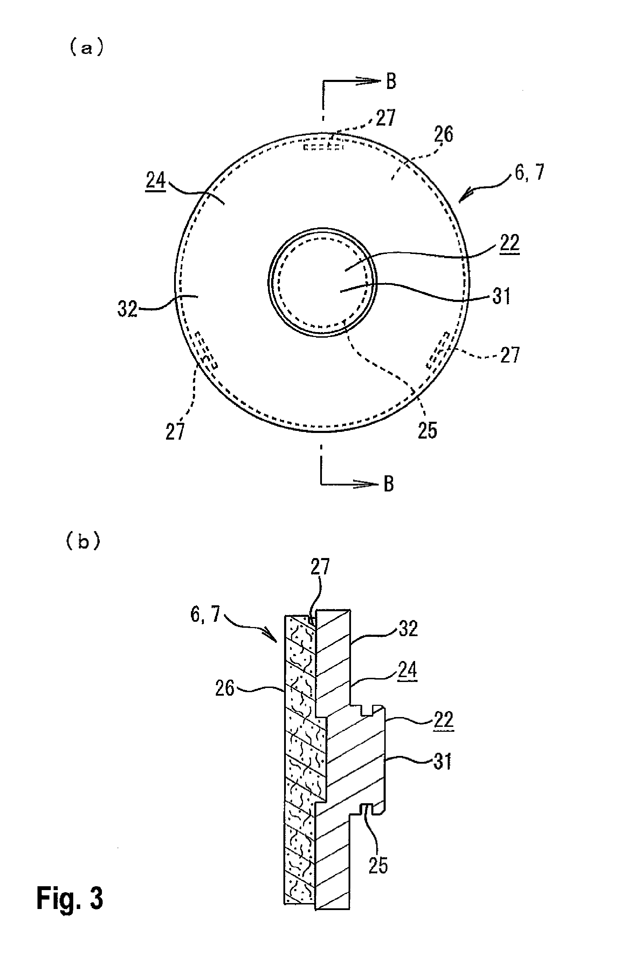

Furthermore, as shown in Figs. 3(a)(b), there are indicator grooves (27) provided in the lining (26) of the friction pads (6) (7). The indicator grooves (27), as shown in Fig. 3(b), are concavely provided from the centre in thickness direction of the lining (26) peripheral surface through to the backing plate (24), with a substantially rectangular base and U-shaped cross-section. Moreover, in the present embodiment the indicator grooves (27) are formed in three locations, at uniform spacing along the circumferential direction of the lining (26).

The formation of indicator grooves in the lining (26) as described above enables, by exposing the indicator grooves (27) at the surface of the lining (26) when the lining (26) has worn down to a predetermined thickness, to confirm by eyesight the time for changing the friction pads (6) (7). Furthermore, because the indicator grooves (27) are provided in three locations at uniform spacing along the circumference of the lining (26) as shown in Fig. 3(a), the indicator grooves (27) can easily be examined, no matter at which phase of their rotational path the friction pads (6) (7) have taken position.

Further, with a C-clip (23) engagedly arranged in the engagement groove (25) formed in the fitting protrusion (22) as described above, the fitting protrusion (22) is inserted for fitting arrangement into the fitting recess (21) of the piston (4). Here, a fitting groove (28) configured to fit the C-clip (23) arranged on the fitting protrusion (22) is provided in circumferential direction at the inner peripheral surface of the fitting recess (21) of the piston (4), such that when the fitting protrusion (22) is fit into the fitting recess (21), the C-clip (23) on the fitting protrusion (22) comes to fit with the fitting groove (28) of the fitting recess (21).

Thereby, the piston (4) and friction pad (6) come to be connected in such a way that they are rotatable independently of each other while in a condition difficult to separate. Moreover, respective dimensions have been coordinated beforehand in such a way that, as shown in Fig. 2, the bottom surface (30) of the fitting recess (21) and the top surface (31) of the fitting protrusion (22) touch, while the tip surface (20) of the piston (4) and the face (32) of the backing plate (24) come to be in a non-touching state, to minimise the touching portions of the piston (4) and backing plate (24) upon assembly. Because the piston (4) and friction pad (6) in this way are assembled to be mutually rotatable while the touching portions of the friction pad (6) and piston (4) are made small, friction arising between the friction pad (6) and piston (4) is enabled to be reduced.

As shown in Fig. 4, a bracket (33) is fixedly arranged on the calliper body (1), the bracket (33) having a recess (34) of a planar U-shape formed therein, with the action part side friction pad (6) being insertedly arranged in the recess (34). Moreover, each of the three inner peripheral surfaces that constitute the recess (34) is formed to lie in a direction tangential to the friction pad (6), the three inner peripheral surfaces respectively being considered as rotation entry side inner peripheral surface (35a), rotation exit side inner peripheral surface (35b), and bottom inner peripheral surface (35c). When not braking with the mechanical arresting brake, slight gaps are formed between the outer circumference (36) of the friction pad (6) and each inner peripheral surface (35a-35c).

Furthermore, a friction pad (7) formed like the action part side friction pad (6) is fixedly arranged on the reaction part (8) of the calliper body (1) as well, such as to be opposed to the action part side friction pad (6). Thereby, as shown in Fig. 1, the disk rotor (5) comes to lie between the action part side friction pad (6) and the reaction part side friction pad (7).

In case of performing braking with a mechanical arresting brake configured as described above, first by pulling the brake wire (37) against the biasing force of a return spring (not shown) using a brake operator (not shown), the mechanical arresting lever (16) is rotated in one direction. Along with the rotation of the mechanical arresting lever (16), the adjustment bolt (3) and screw member (14), which are assembled to rotate as a whole with the mechanical arresting lever (16), rotate in the same direction as the mechanical arresting lever (16). In consequence, because the internal thread of the sleeve nut (13) causes the adjustment bolt (3) to be pushed out together with the screw member (14) toward the disk rotor (5), also the piston (4) formed integrally with the adjustment bolt (3), as well as the action part side friction pad (6) connected to the tip of the piston (4), rotatingly slide toward the side of the disk rotor (5).

Then, due to the friction pad (6) sliding toward the side of the disk rotor (5) as described before, the surface of the friction pad (6) lining (26) comes into surface contact with the surface of the disk rotor (5). Also, the reaction force accompanying the movement of the action part side friction pad (6) causes the calliper body (1) to move into the direction opposite to the movement direction of the piston (4), such that due to the movement of the calliper body (1) the reaction part side friction pad (7) moves toward the disk rotor (5) and is pressed against the reaction part (8) side face of the disk rotor (5). Thus, the pair of friction pads (6) (7) respectively provided on the action part (2) side and the reaction part (8) side as shown in Fig. 1 presses against both faces of the disk rotor (5), thereby performing the braking action of the mechanical arresting brake.

Then, during the braking action of a mechanical arresting brake as described above, the outer circumference (36) of the backing plate (24) of the friction pad (6) contacts the rotation exit side inner peripheral surface (35b) of the recess (34) formed in the bracket (33) as shown in Fig. 4, such that the braking torque from the friction pad (6) is received by the inner periphery of the recess (34). Here, since the rotation exit side inner peripheral surface (35b) of the recess (34) is formed in a direction tangential to the friction pad (6), the outer circumference (36) of the backing plate (24) and the rotation exit side inner peripheral surface (35b) of the recess (34) establish line contact along the thickness direction of both the recess (34) and the backing plate (24). This enables the contacting portions of the friction pad (6) and the recess (34) to be made small, such that generation of rust that occurs at the bracket (33) due to the contact with the backing plate (24) can be reduced to a minimum.

Next, to explain the release of the braking action in the following, by first releasing the pull on the brake wire (37) through operation of the brake operator (not shown), due to the biasing force of the return spring (36), the initial position of the mechanical arresting lever (16) before the commencement of the braking is restored. As a result, the adjustment bolt (3) and piston (4) together with the screw member (14) rotate in the direction opposite to when braking, sliding in the direction away from the disk rotor (5). At this time, because the piston (4) is made rotatable independently of the friction pad (6), the piston (4) is enabled to be rotated in the reverse direction with ease, which enables to prevent situations where releasing the braking action becomes difficult because the piston (4) cannot be rotated in the reverse direction.

By causing as described above the piston (4) to slide in the direction away from the disk rotor (5), the friction pad (6) connected to the piston (4) is enabled to be forced to slide in the direction away from the disk rotor (5). Therefore, the problem that during release of the braking the friction pads (6) (7) are dragged to the disk rotor (5) becomes unlikely to occur. Also, the reaction force accompanying the movement of the action part side friction pad (6) causes the calliper body (1) to move in such a way that the reaction part side friction pad (7) moves to the side opposite from the disk rotor (5). As a result, because each of the friction pads (6) (7) on the action part side and the reaction part side moves to the side opposite from the disk rotor (5), the braking action of the mechanical arresting brake is enabled to be released smoothly.

### Explanation of Reference Signs

- 1: calliper body
- 2: action part
- 3: adjustment bolt
- 4: piston
- 5: disk rotor
- 6, 7: friction pad
- 8: reaction part
- 23: C-clip
- 24: backing plate
- 27: indicator groove
- 33: bracket
- 34: recess
- 35a, 35b, 35c: inner peripheral surface
- 36: outer circumference

## Claims

1. A mechanical arresting disk brake comprising:
an adjustment bolt (3) mounted on an action part (2) side of a calliper body (1);
a piston (4) provided at a tip of said adjustment bolt (3); and
action part (2) side as well as reaction part (8) side friction pads (6,7) that are adapted to be brought, by a movement of said piston (4) toward a disk rotor (5), into sliding contact with both side faces of the disk rotor;
wherein the adjustment bolt (3) and the piston (4) are formed integrally, and wherein a tip of the piston (4) is fittingly arranged, **characterised by**
a C-clip(23) intervening, on a circular coupling section formed on a backing plate (24) that constitutes a back side of the friction pad (6,7), to connect the friction pad (6,7) and the piston (4) in such a way as to be rotatable independently of each other;
at a tip surface (20) of the piston (4) a fitting recess (21) having a circular base and u-shaped cross section being concavely provided;
said circular coupling section corresponding to a cylindrical fitting protrusion (22) that fits into the fitting recess (21) being formed on the backing plate (24) of the friction pad (6,7) with an engagement groove (25) for engagingly arranging the C-clip (23) being concavely provided in the circumferential direction at an outer circumferential surface of the fitting protrusion (22);
the fitting protrusion (22) having the C-clip (23) engagely arranged in the engagement groove (25) being inserted for fitting arrangement into the fitting recess (21) of the piston (4); and
a fitting groove (28) configured to fit the C-clip (23) being arranged on the fitting protrusion (22) being provided in a circumferential direction at the inner peripheral surface of the fitting recess (21) of the piston (4), such when the fitting protrusion (22) is fitted into the fitting recess (21) the C-clip (23) and the fitting protrusion (22) comes to fit with the fitting groove (28) of the fitting recess (21).

2. The mechanical arresting disk brake according to claim 1, wherein the friction pads (6,7) comprise a circular plate shape.

3. The mechanical arresting disk brake according to claim 1 or 2, wherein the friction pads (6,7) comprise indicator grooves (27) that are exposable at a surface by wear of the friction pad (6,7), concavely provided in the outer periphery thereof in multiple locations.

4. The mechanical arresting disk brake according to any one of claims 1 to 3, wherein a bracket (33) is fixedly arranged on the calliper body (1), the bracket (33) comprising a recess (34) that forms an inner peripheral surface in a direction tangential to the action part (2) side friction pad, such that during braking the inner peripheral surface of the recess (34) and an outer peripheral surface of the action part (2) side friction pad (6) come into line contact, to receive a braking torque from the friction pad (6) at the inner peripheral surface of the recess (34).

## Patentansprüche

1. Mechanische arretierende Scheibenbremse, die Folgendes umfasst:
eine Stellschraube (3), die auf einer Aktionsteil (2)-Seite eines Bremssattelkörpers (1) montiert ist,
einen Kolben (4), der an einer Spitze der Stellschraube (3) angeordnet ist; und
auf der Aktionsteil (2)-Seite sowie einer Reaktionsteil (8)-Seite befindliche Bremsklötze (6, 7), die dafür ausgelegt sind, durch eine Bewegung des Kolbens (4) in Richtung eines Scheibenrotors (5) in einen Gleitkontakt mit beiden Seitenflächen des Scheibenrotors (5) gebracht zu werden;
wobei die Stellschraube (3) und der Kolben (4) einstückig ausgebildet sind, und wobei eine Spitze des Kolbens (4) passend angeordnet ist, **gekennzeichnet durch** eine C-Klemme (23), die an einer kreisförmigen Kopplungssektion, die an einer Grundplatte (24) ausgebildet ist, die eine Rückseite des Bremsklotzes (6, 7) bildet, eingreift, um den Bremsklotz (6, 7) und den Kolben (4) in einen solchen Weise zu verbinden, dass sie sich unabhängig voneinander drehen können;
an einer Spitzenfläche (20) des Kolbens (4), eine Passungsaussparung (21) mit einer kreisförmigen Basis und einem U-förmigen Querschnitt, die konkav ausgebildet ist,
wobei die kreisförmige Kopplungssektion einem zylindrischen Passungsvorsprung (22) entspricht, der in die Passungsaussparung (21) passt, die in der Grundplatte (24) des Bremsklotzes (6, 7) mit einer Eingriffsnut (25) zur Eingriffnahme der C-Klemme (23) ausgebildet ist, die konkav in der Umfangsrichtung in einer Außenumfangsfläche des Passungsvorsprung (22) bereitgestellt ist;
wobei der Passungsvorsprung (22) die C-Klemme (23) aufweist, die in die Eingriffsnut (25) eingreift und zu dem Zweck eingesetzt ist, passend in der Passungsaussparung (21) des Kolbens (4) angeordnet zu sein; und
eine Passnut (28), die dafür ausgebildet ist, die C-Klemme (23) aufzunehmen, die an dem Passungsvorsprung (22) angeordnet ist, der in einer Umfangsrichtung an der Innenumfangsfläche der Passungsaussparung (21) des Kolbens (4) bereitgestellt ist, so dass, wenn der Passungsvorsprung (22) in die Passungsaussparung (21) eingepasst wird, die C-Klemme (23) und der Passungsvorsprung (22) in die Passnut (28) der Passungsaussparung (21) eingesetzt werden.

2. Mechanische arretierende Scheibenbremse nach Anspruch 1, wobei die Bremsklötze (6, 7) eine kreisrunde Plattenform umfassen.

3. Mechanische arretierende Scheibenbremse nach Anspruch 1 oder 2, wobei die Bremsklötze (6, 7) Indikatornuten (27) umfassen, die an einer Oberfläche durch Verschleiß des Bremsklotzes (6, 7) frei gelegt werden können, die konkav in seinem Außenumfangsrand an mehreren Stellen angeordnet sind.

4. Mechanische arretierende Scheibenbremse nach einem der Ansprüche 1 bis 3, wobei eine Halterung (33) fest an dem Bremssattelkörper (1) angeordnet ist, wobei die Halterung (33) eine Aussparung (34) aufweist, die eine Innenumfangsfläche in einer Richtung tangential zum Bremsklotz der Aktionsteil (2)-Seite bildet, dergestalt, dass während des Bremsens die Innenumfangsfläche der Aussparung (34) und eine Außenumfangsfläche des Bremsklotzes (6) der Aktionsteil (2)-Seite in Linienkontakt kommen, um ein Bremsdrehmoment von dem Bremsklotz (6) an der Innenumfangsfläche der Aussparung (34) zu empfangen.

## Revendications

1. Frein à disque d'arrêt mécanique, comprenant :
un boulon d'ajustement (3) monté sur une face de pièce d'action (2) d'un corps de pied à coulisse (1) ;
un piston (4) prévu à un bout dudit boulon d'ajustement (3) ; et
une face d'une pièce d'action (2) ainsi que des plaquettes de frein (6, 7) d'une face de pièce de réaction (8) qui sont adaptées pour être amenées, par un mouvement dudit piston (4) vers un rotor de disque (5),
en contact glissant avec les deux faces latérales du rotor de disque (5) ;
dans lequel le boulon d'ajustement (3) et le piston (4) sont formés d'un seul tenant, et dans lequel un bout du piston (4) est agencé de manière ajustée,
**caractérisé par**
un clip en C (23) intervenant sur une section de couplage circulaire formée sur un plateau de frein (24) qui constitue une face arrière de la plaquette de frein (6, 7) pour relier la plaquette de frein (6, 7) et le piston (4) de manière à pouvoir tourner indépendamment l'un par rapport à l'autre ;
à une surface en bout (20) du piston (4) un évidement d'ajustement (21) présentant une base circulaire et une coupe transversale en forme de U prévue de manière concave ;
ladite section de couplage circulaire correspondant à une saillie d'ajustement cylindrique (22) qui s'ajuste dans l'évidement d'ajustement (21) formé sur le plateau de frein (24) de la plaquette de frein (6, 7) avec une rainure d'engagement (25) pour agencer par engagement le clip en C (23) fourni de manière concave dans la direction circonférentielle au niveau d'une surface circonférentielle extérieure de la saillie d'ajustement (22) ;
la saillie d'ajustement (22) présentant le clip en C (23) agencé par engagement dans la rainure d'engagement (25) insérée pour un agencement par ajustement dans l'évidement d'ajustement (21) du piston (4) ; et
une rainure d'ajustement (28) configurée pour ajuster le clip en C (23) agencé sur la saillie d'ajustement (22) fournie dans une direction circonférentielle au niveau de la surface périphérique intérieure de l'évidement d'ajustement (21) du piston (4), de telle sorte que,
lorsque la saillie d'ajustement (22) est ajustée dans l'évidement d'ajustement (21), le clip en C (23) et la saillie d'ajustement (22) viennent s'ajuster avec la rainure d'ajustement (28) de l'évidement d'ajustement (21).

2. Frein à disque d'arrêt mécanique selon la revendication 1, dans lequel les plaquettes de frein (6, 7) comprennent une forme de plateau circulaire.

3. Frein à disque d'arrêt mécanique selon la revendication 1 ou 2, dans lequel les plaquettes de frein (6, 7) comprennent des rainures indicatrices (27) qui peuvent être exposées au niveau d'une surface par l'usure de la plaquette de frein (6, 7), prévue de manière concave dans sa périphérie extérieure en de multiples emplacements.

4. Frein à disque d'arrêt mécanique selon une quelconque des revendications 1 à 3, dans lequel un support (33) est agencé de manière fixe sur le corps de pied à coulisse (1), le support (33) comprenant un évidement (34) qui forme une surface périphérique intérieure dans une direction tangentielle à la plaquette de frein de la face de pièce d'action (2), de telle sorte que, durant le freinage, la surface périphérique intérieure de l'évidement (34) et une surface périphérique extérieure de la plaquette de frein (6) de la face de pièce d'action (2) viennent en contact linéaire, afin de recevoir un couple de freinage provenant de la plaquette de frein (6) au niveau de la surface périphérique intérieure de l'évidement (34).
